(19) Europäisches Patentamt
European Patent Office
Office européen des brevets

(11) EP 0 460 987 B1

## (12) FASCICULE DE BREVET EUROPEEN

(45) Date de publication et mention
de la délivrance du brevet:
**09.04.1997 Bulletin 1997/15**

(51) Int. Cl.⁶: $C04B\ 35/10$, $C04B\ 35/80$, $C04B\ 38/00$

(21) Numéro de dépôt: **91401292.7**

(22) Date de dépôt: **17.05.1991**

(54) **Préformes en céramiques, leur procédé de fabrication et leurs applications**

Keramische Vorformen, ihre Herstellung und ihre Verwendungen

Ceramic preforms, process for their production and applications thereof

(84) Etats contractants désignés:
**AT BE CH DE DK ES FR GB GR IT LI LU NL SE**

(30) Priorité: **23.05.1990 FR 9006448**

(43) Date de publication de la demande:
**11.12.1991 Bulletin 1991/50**

(73) Titulaire: **ELF ATOCHEM S.A.**
**92800 Puteaux (FR)**

(72) Inventeurs:
• **Bachelard, Roland**
**F-69007 Lyon (FR)**
• **Faure, Annick**
**F-69200 Venissieux (FR)**

(74) Mandataire: **Rochet, Michel et al**
**ELF ATOCHEM S.A.,**
**Département Propriété Industrielle,**
**4-8, Cours Michelet,**
**La Défense 10 - Cedex 42**
**92091 Paris-La-Défense (FR)**

(56) Documents cités:
**EP-A- 301 748**  **EP-A- 328 805**
**EP-A- 0 425 325**  **DE-A- 2 850 064**
**US-A- 4 142 908**

• **CHEMICAL ABSTRACTS, vol. 79, no. 16, 22 octobre 1973, page 261, colonne 1, résumé no. 96077k, Columbus, Ohio, US; B. LOCSEI: "Determination of the aluminum fluoride quantity for the production of corundum of mullite under consideration of the P-axis of the reaction", & TONIND.-ZTG. KERAM. RUNDSCH. 1973, 97(5), 128-31**
• **WPI, FILE SUPPLIER, AN=77-35635Y, Derwent Publications Ltd, London, GB; & SU-A- 353 522 (AS SIBE CATALYSIS)**

Remarques:
Le dossier contient des informations techniques présentées postérieurement au dépôt de la demande et ne figurant pas dans le présent fascicule.

## Description

La présente invention a pour objet des préformes en céramiques ainsi que leur procédé de fabrication. Elle concerne également l'utilisation de ces préformes notamment pour la fabrication de composites métalliques ou céramiques.

On a déjà décrit (EP-A-0328805) un procédé de fabrication de composites métalliques, selon lequel un métal à l'état fondu est placé dans une cavité, une préforme est placée sur le métal fondu et, sous l'effet d'une pression appliquée sur la préforme, le métal fondu imprègne ladite préforme. Selon ce brevet, la préforme est constituée par un matériau fibreux réfractaire, tel que l'alumine, le zircone, la silice, le carbure de silicium, le nitrure de silicium, de déborure de titane sous forme de fibres hachées.

Dans la demande EP-A-0337732, on a également proposé de fabriquer des composites métalliques renforcés par du nitrure de silicium type β mis en oeuvre sous forme de whiskers. Ce procédé consiste à imprégner le whisker au moyen du métal fondu et à solidifier ce dernier pour obtenir le composite métallique renforcé par ledit whisker. Le whisker est lui-même obtenu par calcination à haute température d'une poudre denitrure de silicium amorphe ou de type α. Il se présente sous forme de fibres ayant 0,1 à 5 μm de diamètre et 2 à 100 ppm de longueur.

Dans la demande japonaise 1.180.929, on prépare des préformes pour composites à base d'aluminium par compression de fibres courtes d'alumine, de silice, de nitrure de silicium, de carbure de silicium, de verre ou de carbone, additionnées d'un lubrifiant tel que graphite, $MoS_2$, $WS_2$, Sn, Pb, ciment alumineux, gypse, fluorite, d'un liant résineux et d'un solvant.

Dans la demande japonaise 1.157.803, pour préparer des préformes, on mélange une poudre inorganique fine (oxyde d'aluminium, carbure de silicium, silicate, oxyde de titane, oxyde de zirconium, nitrure de silicium, carbure de bore, nitrure de bore), avec un liant choisi parmi les résines solubles dans l'eau, malaxe l'ensemble, l'introduit dans un moule préalablement revêtu d'une feuille d'acétal polyvinylique et chauffe l'ensemble pour le solidifier et intégrer la feuille d'acétal sur la surface de la préforme.

La demande japonaise 1.225.732 décrit également l'imprégnation de fibres courtes (par exemple $Al_2O_3$) au moyen d'une matrice métallique. Ces préformes contiennent jusqu'à 10% d'un liant inorganique et jusqu'à 5 % de particules de silice.

La demande japonaise 87-139838 décrit la fabrication de composites métalliques renfermant des whiskers de carbure de silicium de forme précise et uniforme.

La demande japonaise 87-299569 décrit la fabrication de composites métalliques (Al) renfermant une préforme en fibres inorganiques. Ces fibres sont mises en oeuvre sous forme de feutre obtenu par immersion de fibres tissées de SiC, $Si_3N_4$, $Al_2O_3$, C et/ou métal dans un bain agité par ultrasons contenant des fibres courtes, des whiskers et/ou des poudres de céramique, carbone et/ou métal.

Il apparaît à la lecture de ces documents antérieurs que les préformes ont été jusqu'à présent essentiellement formées à partir de matériaux fibreux ou de whiskers ou de poudre d'un oxyde, carbure ou nitrure métallique, ces dernières étant liées au moyen d'une résine soluble dans l'eau du type acétate de polyvinyle, acétate de cellulose, alcool polyvinylique, ou d'amidon.

L'invention propose de nouvelles préformes, ces préformes étant caractérisées en ce qu'elles comprennent des monocristaux d'alumine α sous forme de plaquettes hexagonales.

Parmi ces préformes, l'invention concerne tout particulièrement d'une part les préformes essentiellement constituées de plaquettes hexagonales d'alumine α, et d'autre part, les préformes mixtes dans lesquelles lesdites plaquettes sont associées à un ou plusieurs autres produits de renforcement tel que whiskers, fibres courtes, particules fines de céramique, ces produits pouvant être choisis parmi les produits cités dans les références mentionnées ci-avant, la teneur en alumine α restant de préférence majoritaire.

Dans les préformes essentiellement constituées de plaquettes hexagonales d'alumine α, la teneur en cette dernière est au moins égale à 90 % en poids.

L'invention concerne encore des préformes essentiellement constituées de plaquettes hexagonales dont la structure poreuse est homogène et plus précisément des préformes dont la distribution des rayons de pores présente un étalement tel que $\sigma^2 = R\,84/R\,16 \leq 3$, où :

R 84 désigne le rayon des pores pour 84 % du volume poreux cumulé,
R 16 désigne le rayon des pores pour 16 % du volume poreux cumulé
avec $R\,84/R\,50 = \sigma$, $\sigma$ étant l'écart-type de la distribution des rayons de pore.

L'invention concerne encore de telles préformes dont la porosité est d'au moins 70 % et entièrement constitué de pores de rayon supérieur à 0,1 μm.

L'invention concerne encore de telles préformes stables à plus de 1500°C.

Dans le présent document, la porosité est mesurée au porosimètre à mercure ou calculée à partir de la détermination de la densité apparente de la préforme connaissant la densité absolue du matériau. La répartition du volume

2

poreux en fonction des rayons de pores est mesurée par porosimètre au mercure.

Dans les préformes conformes à l'invention, les plaquettes hexagonales monocristallines sont essentiellement constituées de macrocristaux présentant de préférence un diamètre compris entre 2 et 50 $\mu$m, une épaisseur comprise entre 0,1 et 2 $\mu$m et un rapport diamètre/épaisseur compris entre 5 et 100.

Parmi ces macrocristaux, on mentionnera tout particulièrement les plaquettes présentant un diamètre compris entre 2 et 18 $\mu$m, une épaisseur comprise entre 0,1 et 1 $\mu$m et un rapport diamètre/épaisseur compris entre 5 et 40.

L'invention concerne également un procédé de fabrication des préformes, ce procédé étant caractérisé en ce qu'il consiste à cristalliser en un amas cohérent de plaquettes hexagonales d'alumine $\alpha$, le cas échéant en présence d'un matériau de renforcement, une poudre fine tassée d'alumine amorphe, de transition ou hydratée.

L'expression "poudre tassée" est utilisée pour désigner une poudre tassée dans un récipient jusqu'à ce qu'on n'observe plus de diminution de volume (selon la norme NF ISO 3953).

Selon ce procédé, la cristallisation en plaquettes hexagonales s'effectue en présence d'un fondant contenant du fluor lié chimiquement et étant solvant à l'état fondu de l'alumine mise en oeuvre.

L'expression "alumine de transition ou hydratée" désigne présentement toutes les formes d'oxyde ou d'hydroxyde d'aluminium, éventuellement hydraté, à l'exception de l'alumine $\alpha$.

Le fondant, également appelé minéralisant, et répondant aux caractéristiques définies ci-avant, est essentiellement constitué par un ou plusieurs composé(s) fluoré(s) non hydrolysable(s) ou par un couple comprenant une phase constituée par ledit ou lesdits composé(s) fluoré(s) non hydrolysable(s), et une phase constituée par un composé fluoré hydrolysable, l'une des phases étant dissoute dans l'autre phase.

A titre d'illustration des fondants précités, on mentionnera tout particulièrement les couples comprenant le trifluorure d'aluminium et un ou plusieurs fluorure(s) alcalin(s) ou alcalino-terreux, et notamment les fluorures de lithium, sodium, potassium ou calcium. On retiendra plus spécifiquement le couple $AlF_3$-LiF sous la forme $Li_3AlF_6$ (cryolite lithique), $Na_3AlF_6$ (cryolithe sodique), $K_3AlF_6$ (cryolithe potassique) ou encore $Li_3Na_3(AlF_6)_2$ (cryolithionite) ou 3 $AlF_3$, 5 LiF (chiolite lithique).

Les fondants utilisés dans l'invention se présentent sous forme de poudre dont la granulométrie est de préférence inférieure à 1 mm (pour au moins 50 % en poids des grains).

Dans la mise en oeuvre du procédé conforme à l'invention, on utilise au moins 2 % et de préférence 4 à 20 % en poids de fondant par rapport au poids de l'alumine engagée.

Selon le procédé conforme à l'invention, le mélange d'alumine de départ et de fondant, soigneusement tassé dans un moule est chauffé, le cas échéant, en atmosphère inerte (azote par exemple) au-dessus du point de fusion du fondant et, de préférence, entre 900 et 1200°C, et est maintenu à cette température jusqu'à conversion de l'alumine de départ en alumine $\alpha$ (corindon). En règle générale, cette transformation est obtenue dans un délai pouvant aller, à titre indicatif, de quelques minutes à quelques heures.

Selon une variante du procédé conforme à l'invention, et notamment lorsqu'on vise à obtenir des plaquettes de diamètre et/ou épaisseur proches des valeurs supérieures indiquées précédemment, on peut associer à l'alumine de départ des plaquettes hexagonales d'alumine $\alpha$ préparées antérieurement.

Selon une autre variante on peut former les préformes conformes à l'invention non pas à partir d'alumine et de fondant ou encore d'un mélange comprenant l'alumine, le fondant et des plaquettes hexagonales d'alumine $\alpha$, comme décrit ci-avant mais uniquement à partir de telles plaquettes hexagonales d'alumine $\alpha$, éventuellement associées à un matériau de renforcement.

L'alumine de transition ou hydratée peut être choisie dans une large gamme de produits en poudres de diamètres et surfaces spécifiques variés. On retiendra tout particulièrement les alumines dont au moins 50 % en poids des grains ont un diamètre inférieur à 50 $\mu$m, et de préférence inférieur à 25 $\mu$m et plus encore à 1,5 $\mu$m. Parmi ces alumines, on donnera la préférence aux alumines présentant une surface spécifique égale ou supérieure à 100 $m^2$/g (mesurée selon la méthode BET) et de préférence comprise entre 100 et 400 $m^2$/g.

L'alumine et le fondant peuvent être mis en oeuvre soit sous forme de mélange à sec (poudres), soit sous forme d'alumine imprégnée au moyen d'une solution aqueuse du fondant, le cas échéant en présence d'un solubilisant ($AlCl_3$ par exemple).

Après refroidissement et démoulage, la masse poreuse obtenue peut être façonnée par sciage, abrasion ou par toute autre opération permettant de lui conférer la forme et les dimensions désirées.

Selon une variante de ce procédé, et dans le but notamment d'accroître la résistance mécanique des préformes, un traitement thermique complémentaire peut être appliqué à l'issue de la cristallisation. Ce traitement est de préférence effectué à une température supérieure à la température de cristallisation. Ce traitement à haute température permet d'éliminer le fondant et/ou les produits dérivés dudit fondant.

Le procédé conforme à l'invention présente une grande facilité de mise en oeuvre, cette facilité étant liée en particulier au fait que ce procédé peut être mis en oeuvre à sec.

Les préformes conformes à l'invention peuvent, du fait de leurs propriétés réfractaires, constituer en elle-mêmes des briques légères utilisables pour l'isolation thermique à haute température.

Elles peuvent également, par le matériau qui les constitue et par leur forte porosité, servir à la fabrication de composites par imprégnation au moyen d'un métal ou alliage fondu et en particulier au moyen d'aluminium ou d'un alliage d'aluminium.

Les exemples suivants illustrent l'invention.

## EXEMPLE 1

On mélange à température ambiante une poudre d'alumine et le fondant $Li_3AlF_6$ à raison de 5 % en poids par rapport au poids d'alumine.

L'alumine utilisée est une alumine gamma de surface spécifique 172 $m^2$/g et telle que 50 % en poids des grains la constituant ont un diamètre inférieur à 1,1 $\mu$m ; le fondant est tel que 50 % en poids des grains le constituant ont un diamètre inférieur à 0,9 $\mu$m (le point de fusion de ce produit est de 776° C).

Le mélange est placé dans un creuset et tassé manuellement jusqu'à l'obtention d'une densité de 0,65 environ. Le creuset est introduit dans le four en atmosphère d'air. La température du four est élevée à 980° C en une heure puis maintenue à cette température pendant une heure. Le refroidissement s'effectue à l'air ambiant.

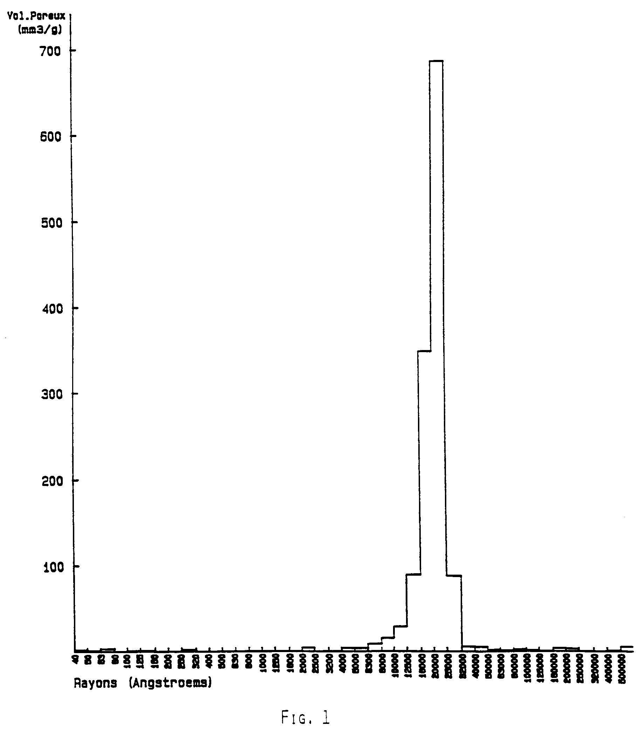

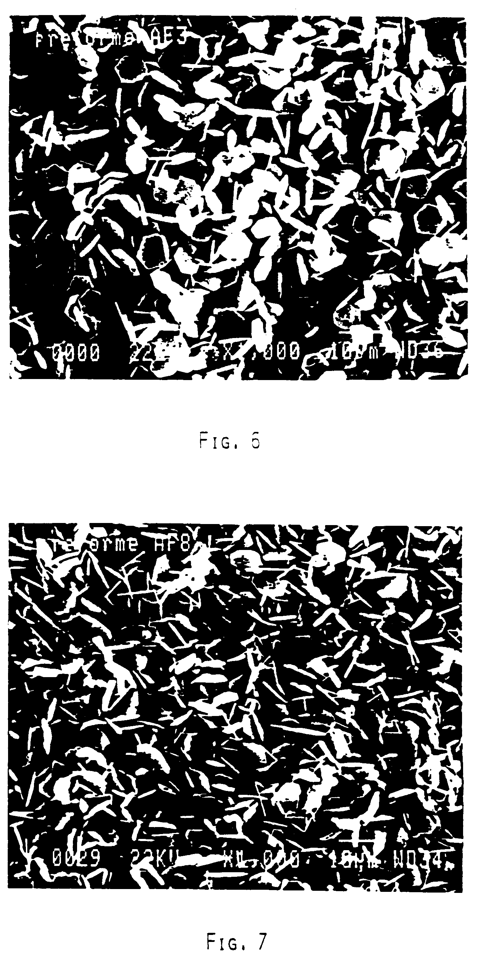

Le produit obtenu est une préforme qui se démoule facilement, constituée de plaquettes de diamètre moyen d de 7 $\mu$m et d'épaisseur moyenne e de 0,5 $\mu$m. Elle a une densité de 0,63, un volume poreux de 1,318 $cm^3$/g. Le mode de la distribution poreuse défini comme la classe de pores représentant le volume poreux le plus important est la classe délimitée par les rayons $R_1$ = 2 $\mu$m et $R_2$ = 2,5 $\mu$m. La figure 1 donne l'histogramme des volumes poreux de cette préforme et la figure 6 une microphotographie de ladite préforme (grossissement 1000).

## EXEMPLE 2

Le mélange, identique à celui de l'exemple 1, est soumis préalablement à un tassement, à une pression de $10^7$ Pa. Il est ensuite enfourné tel quel, l'utilisation d'un creuset n'étant, dans ce cas, pas nécessaire. La cuisson est identique à celle de l'exemple 1.

## EXEMPLE 3

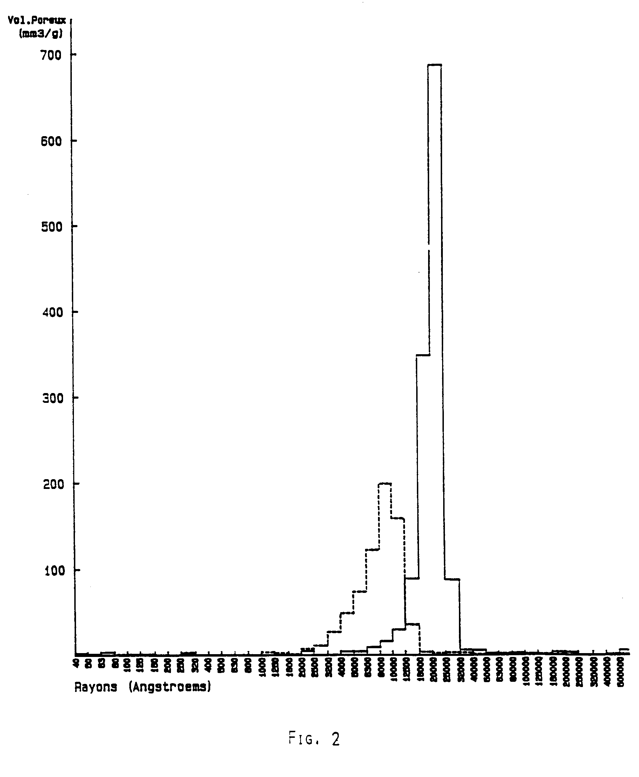

On procède comme dans l'exemple 2 mais le pré-tassement est effectué sur une pression de $5.10^7$ Pa. La figure 2 donne l'histogramme des volumes poreux (traits pointillés) avec rappel de l'histogramme de l'exemple 1 (traits continus) et la figure 7 est une microphotographie de cette préforme (grossissement 1000).

## EXEMPLE 4

On procède comme dans l'exemple 3 mais avec pré-tassement sous $10^8$ Pa.

## EXEMPLE 5

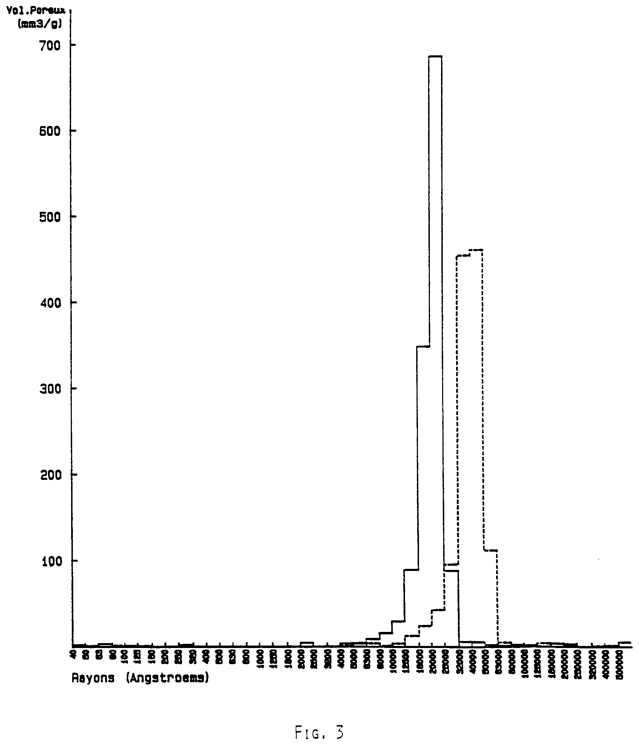

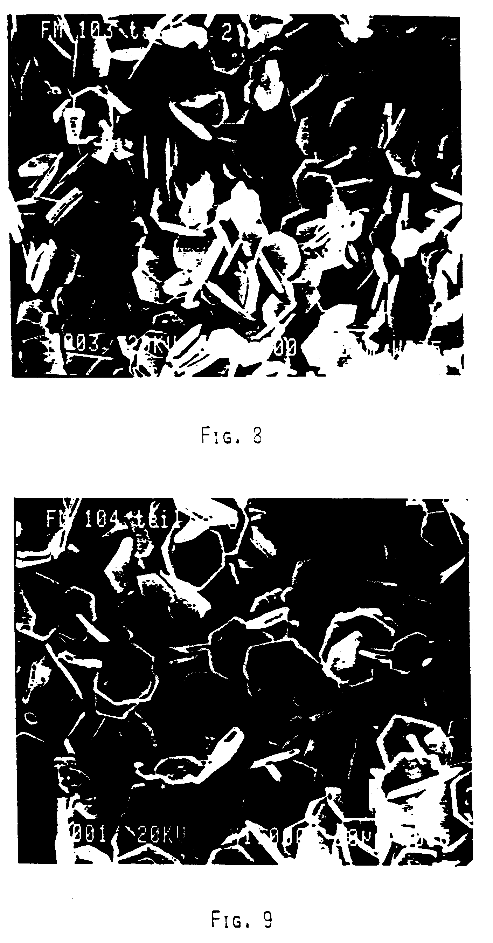

Au mélange décrit dans l'exemple 1, on ajoute 50 % de son poids de plaquettes obtenus par désagglomération de la préforme synthétisée dans l'exemple 1. Ce tassement est identique à celui de l'exemple 1 ainsi que les conditions de cuisson. La figure 3 donne un histogramme des volumes poreux de la préforme (traits pointillés) avec rappel de l'histogramme de l'exemple 1 (traits continus). La microphotographie de la figure 8 montre les macrocristaux de cette préforme.

## EXEMPLE 6

Au mélange décrit dans l'ensemble 1, on ajoute 50 % de son poids de plaquettes obtenues par désagglomération de la préforme synthétisée dans l'ensemble 5. Toutes autres conditions sont identiques à celles de l'exemple 1. La figure 9 est une microphotographie des macrocristaux de cette préforme.

## EXEMPLE 7

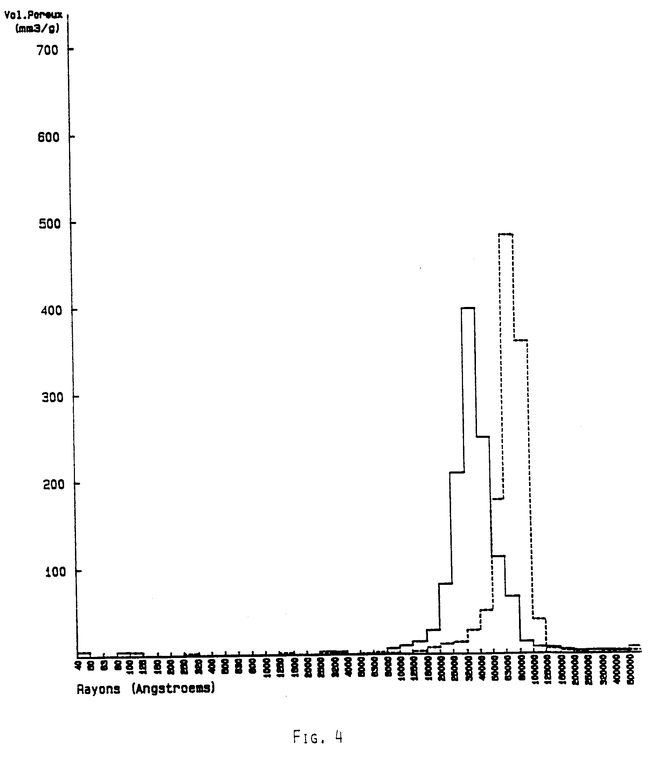

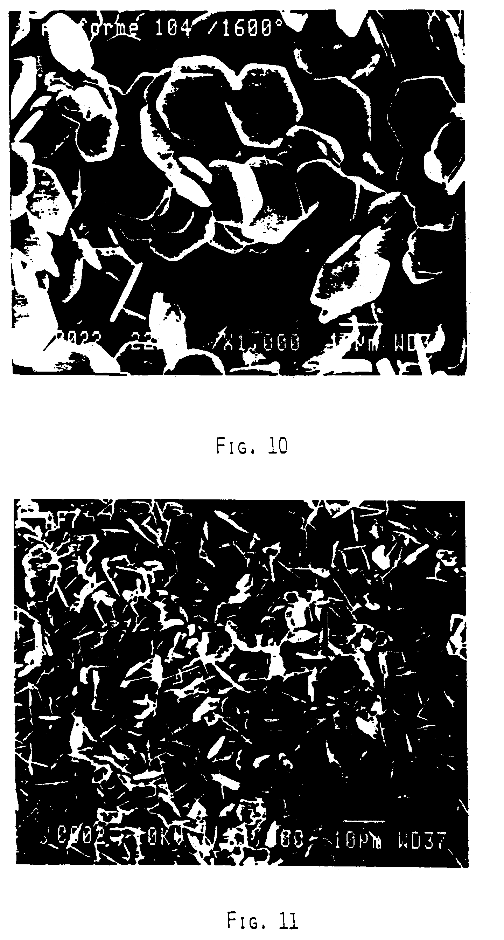

La préforme de l'exemple 6 est portée à 1600° C pendant 3 heures. La figure 4 donne les histogrammes des volumes poreux des préformes de l'exemple 6 (traits continus) et de l'exemple 7 (traits pointillés). La figure 10 est une microphotographie de cette préforme.

## EXEMPLE 8

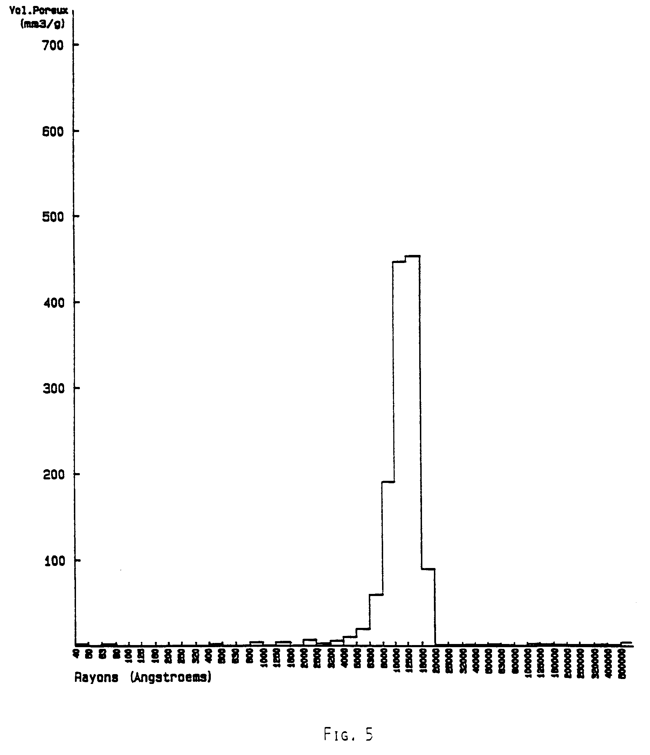

Au mélange décrit dans l'exemple 1, on ajoute 10 % de son poids de whiskers de SiC. Toutes autres conditions sont identiques. La figure 5 donne l'histogramme des volumes poreux de cette préforme. La figure 11 est une microphotographie de cette préforme (grossissement 1000). La figure 12 est une microphotographie à grossissement 10.000 montrant la formation d'une plaquette autour d'un whisker.

EXEMPLE 9

La préforme de l'exemple 1 est infiltrée suivant les conditions ci-après :

alliage 6061 (Al/1 % Mg/0,5 % Si)
pression d'infiltration 100 MPa
température de la préforme 600° C
température de l'alliage 800° C
durée du forgeage 30 secondes

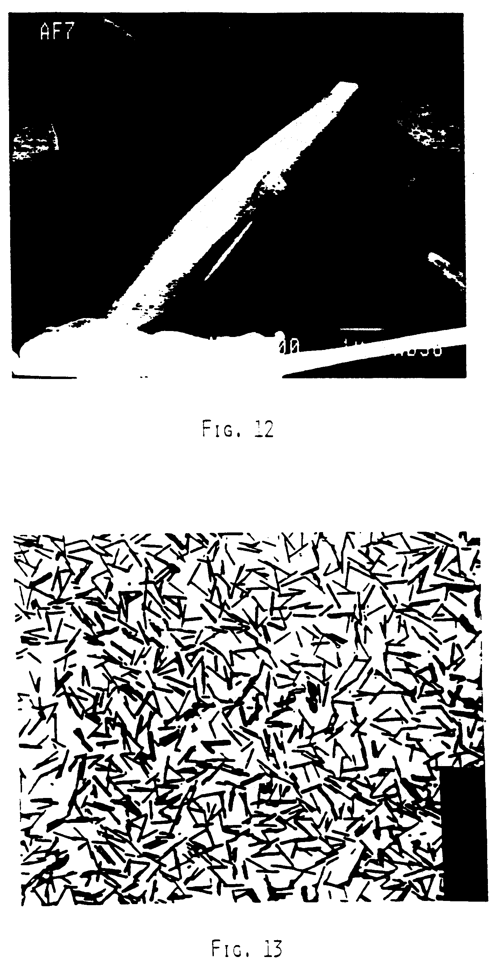

La dureté Vickers mesurée sur le composite est de 130 Hv contre 40 Hv pour l'alliage pur. La figure 12 montre cette préforme imprégnée (grossissement 800), les parties noires correspondant aux macrocristaux d'alumine $\alpha$, les parties blanches correspondant à l'alliage.

L'ensemble des déterminations est reporté sur le tableau suivant :

| EXEMPLE | DIMENSION DES PLAQUETTES | | CARACTERISTIQUES DE LA PREFORME | | |
|---|---|---|---|---|---|
| | d($\mu$m) | e($\mu$m) | densité | Volume poreux (cm3/g) | Mode R1-R2 ($\mu$m) |
| 1 | 7 | 0,5 | 0,63 | 1,318 | 2-2,5 |
| 2 | 7 | 0,5 | 0,89 | 0,873 | 1,25-1,6 |
| 3 | 7 | 0,5 | 1,04 | 0,709 | 0,8-1,6 |
| 4 | 7 | 0,5 | 1,09 | 0,647 | 0,63-0,8 |
| 5 | 12 | 1 | 0,66 | 1,24 | 3,2-4 |
| 6 | 18 | 1,2 | 0,67 | 1,231 | 3,2-4 |
| 7 | 18 | 1,2 | 0,69 | 1,203 | 6,3-8 |
| 8 | 7 | 0,5 | 0,63 | 1,320 | 1,25-1,6 |

**Revendications**

1. Préformes poreuses en céramique, caractérisées en ce qu'elles comprennent des monocristaux d'alumine $\alpha$ sous forme de plaquettes hexagonales.

2. Préformes selon la revendication 1, caractérisées en ce qu'elles sont essentiellement constituées de plaquettes hexagonales d'alumine $\alpha$.

3. Préformes selon l'une quelconque des revendications 1 ou 2, caractérisées en ce que la teneur en alumine $\alpha$ est au moins égale à 90 % en poids.

4. Préformes selon la revendication 1, caractérisées en ce qu'elles comprennent des plaquettes hexagonales d'alumine $\alpha$ associées à un ou plusieurs autres produits de renforcement.

5. Préformes selon la revendication 4, caractérisées en ce que le ou les autres produit(s) associé(s) aux plaquettes hexagonales est(sont) choisi(s) dans le groupe comprenant les whiskers, les fibres courtes, ou encore les particules fines de céramique.

6. Préformes selon la revendication 5, caractérisées en ce que la teneur en plaquettes hexagonales d'alumine $\alpha$ est majoritaire sur le plan pondéral.

**EP 0 460 987 B1**

7. Préformes selon l'une quelconque des revendications 2 ou 3, caractérisées en ce que leur structure est poreuse et la distribution des rayons des pores présente un étalement tel que $\sigma^2$ = R 84/R 16 ≤ 3 , où R 84 désigne le rayon des pores pour 84 % du volume poreux cumulé, R 16 désigne le rayon des pores pour 16 % du volume poreux cumulé avec R 84/R 50 = $\sigma$ , $\sigma$ étant l'écart-type de la distribution des rayons de pore.

8. Préformes selon l'une quelconque des revendications 2, 3 et 7, caractérisées en ce que leur porosité est d'au moins 70 % et est entièrement constituée de pores de rayon supérieur à 0,1 μm.

9. Préformes selon l'une quelconque des revendications 1 à 8, caractérisées en ce que les plaquettes hexagonales sont essentiellement constituées de macrocristaux présentant de préférence un diamètre compris entre 2 et 50 μm, une épaisseur comprise entre 0,1 et 2 μm et un rapport diamètre/épaisseur compris entre 5 et 100.

10. Procédé de fabrication des préformes selon l'une quelconque des revendications 1 à 9, caractérisé en ce qu'il consiste à cristalliser en un amas cohérent de plaquettes hexagonales d'alumine α, le cas échéant en présence d'un matériau de renforcement, une poudre fine d'alumine amorphe, de transition ou hydratée en présence d'un fondant contenant du fluor lié chimiquement, ladite poudre étant tassée jusqu'à ce qu'on n'observe plus de diminution de volume.

11. Procédé selon la revendication 10, caractérisé en ce que le fondant est solvant à l'état fondu de l'alumine mise en oeuvre.

12. Procédé selon l'une quelconque des revendications 10 ou 11, caractérisé en ce que le fondant est essentiellement constitué par un ou plusieurs composé(s) fluoré(s) non hydrolysable(s) ou par un couple comprenant une phase constituée par ledit ou lesdits composé(s) fluoré(s) non hydrolysable(s) et par une phase constituée par un composé fluoré hydrolysable, l'une des phases étant dissoute dans l'autre phase.

13. Procédé selon l'une quelconque des revendications 10 à 12, caractérisé en ce que la cristallisation est effectuée à une température supérieure au point de fusion du fondant et de préférence comprise entre 900 et 1200°C.

14. Procédé selon l'une quelconque des revendications 10 à 13, caractérisé en ce que le mélange de départ comprend, outre la poudre d'alumine et le fondant, des plaquettes hexagonales d'alumine α d'une opération précédente.

15. Des briques réfractaires usinées à partir des préformes selon l'une quelconque des revendications 1 à 9.

16. Des composites par imprégnation des préformes selon l'une quelconque des revendications 1 à 9 au moyen d'un métal ou alliage métallique mis en oeuvre à l'état fondu.

**Claims**

1. Porous preforms made of ceramic, characterized in that they comprise monocrystals of α-alumina in the form of hexagonal platelets.

2. Preforms according to Claim 1, characterized in that they essentially consist of hexagonal platelets of α-alumina.

3. Preforms according to either one of Claims 1 and 2, characterized in that the α-alumina content is at least 90 % by weight.

4. Preforms according to Claim 1, characterized in that they comprise hexagonal platelets of α-alumina in combination with one or more other reinforcing products.

5. Preforms according to Claim 4, characterized in that the other product(s) combined with the hexagonal platelets is(are) chosen from the group comprising whiskers, short fibres or fine ceramic particles.

6. Preforms according to Claim 5, characterized in that the content of hexagonal platelets of α-alumina is predominant by weight.

7. Preforms according to either of Claims 2 and 3, characterized in that their structure is porous and the pore radius distribution has a spread such that $\sigma^2$ = R 84/R 16 ≤ 3 , where R 84 denotes the pore radius for 84% of the cumulative pore volume, R 16 denotes the pore radius for 16% of the cumulative pore volume, with R 84/R 50 = $\sigma$, $\sigma$ being the standard deviation of the pore radius distribution.

8. Preforms according to any one of Claims 2, 3 and 7, characterized in that their porosity is at least 70% and consists entirely of pores having a radius larger than 0.1 $\mu$m.

9. Preforms according to any one of Claims 1 to 8, characterized in that the hexagonal platelets essentially consist of macrocrystals preferably having a diameter of between 2 and 50 $\mu$m, a thickness of between 0.1 and 2 $\mu$m and a diameter/thickness ratio of between 5 and 100.

10. Process for the production of preforms according to any one of Claims 1 to 9, characterized in that it consists in crystallizing a fine powder of amorphous alumina, transition alumina or alumina hydrate in the presence of a flux which contains chemically bonded fluorine into a coherent mass of hexagonal platelets of $\alpha$-alumina, if necessary in the presence of a reinforcing material, the said powder being compacted until no further reduction in volume is observed.

11. Process according to Claim 10, characterized in that the flux, in the molten state, is a solvent for the alumina used.

12. Process according to either of Claims 10 and 11, characterized in that the flux essentially consists of one or more non-hydrolysable fluorine-containing compound(s) or of a pair comprising a phase consisting of the said non-hydrolysable fluorine-containing compound(s) and a phase consisting of a hydrolysable fluorine-containing compound, one of the phases being dissolved in the other phase.

13. Process according to any one of Claims 10 to 12, characterized in that the crystallization is effected at a temperature higher than the melting point of the flux and preferably of between 900 and 1200°C.

14. Process according to any one of Claims 10 to 13, characterized in that the starting mixture comprises, in addition to the alumina powder and the flux, hexagonal platelets of $\alpha$-alumina from a preceding operation.

15. Refractory bricks machined from preforms according to any one of Claims 1 to 9.

16. Composites by impregnation of preforms according to any one of Claims 1 to 9 by means of a metal or metal alloy used in the molten state.

**Patentansprüche**

1. Poröse keramische Vorformen, dadurch gekennzeichnet, daß sie $\alpha$-Aluminiumoxidmonokristalle in Form von hexagonalen Täfelchen enthalten.

2. Vorformen nach Anspruch 1, dadurch gekennzeichnet, daß sie in, wesentlichen aus hexagonalen $\alpha$-Aluminiumoxidtäfelchen bestehen.

3. Vorformen nach Anspruch 1 oder 2, dadurch gekennzeichnet, daß der $\alpha$-Aluminiumoxidgehalt mindestens 90 Gew.-% beträgt.

4. Vorformen nach Anspruch 1, dadurch gekennzeichnet, daß sie hexagonale Aluminiumoxidtäfelchen enthalten, die mit einem oder mehreren weiteren Produkten zur Verstärkung kombiniert sind.

5. Vorformen nach Anspruch 4, dadurch gekennzeichnet, daß das oder die Produkte, die mit dem hexagonalen Täfelchen kombiniert sind, ausgewählt sind aus der Gruppe von Whiskern, kurzen Fasern oder auch feinen Keramikpartikeln.

6. Vorformen nach Anspruch 5, dadurch gekennzeichnet, daß der Gehalt an hexagonalen $\alpha$-Aluminiumoxidtäfelchen hinsichtlich des Gewichts überwiegt.

7. Vorformen nach Anspruch 2 oder 3, dadurch gekennzeichnet, daß ihre Struktur porös ist und die Verteilung der Porenradien der Verteilung $\sigma^2$ = R 84/R 16 ≤ 3 entspricht, wobei R 84 den Porenradius für 84 % des kumulierten Porenvolumens bezeichnet, R 16 den Porenradius für 16 % des kumulierten Porenvolumens bezeichnet, wobei R 84/R 50 = $\sigma$ ist, und $\sigma$ die Abweichung der Verteilung der Porenradien bezeichnet.

8. Vorformen nach einem der Ansprüche 2, 3 und 7, dadurch gekennzeichnet, daß ihre Porosität mindestens 70 % beträgt und im wesentlichen aus Poren mit einem Radius oberhalb von 0,1 μm besteht.

9. Vorformen nach einem der Ansprüche 1 bis 8, dadurch gekennzeichnet, daß die hexagonalen Täfelchen im wesentlichen aus Makrokristallen bestehen, die vorzugsweise einen Durchmesser zwischen 2 und 50 μm, eine Dicke zwischen 0,1 und 2 μm und ein Durchmesser/Dicke-Verhältnis zwischen 5 und 100 aufweisen.

10. Verfahren zur Herstellung von Vorformen nach einem der Ansprüche 1 bis 9, dadurch gekennzeichnet, daß man ein feines, amorphes Aluminiumoxidpulver, entweder in der Übergangsform oder in hydratisierter Form, gegebenenfalls in Gegenwart eines Materials zur Verstärkung, in Gegenwart eines chemisch gebundenes Fluor enthaltenden Flußmittels zu einer kohärenten Masse von hexagonalen $\alpha$-Aluminiumoxidtäfelchen kristallisiert, wobei dieses Pulver solange zusammengepreßt wird, bis man keine Volumenabnahme mehr beobachtet.

11. Verfahren nach Anspruch 10, dadurch gekennzeichnet, daß das Flußmittel ein Lösemittel im geschmolzenen Zustand des eingesetzten Aluminiumoxids ist.

12. Verfahren nach Anspruch 10 oder 11, dadurch gekennzeichnet, daß das Flußmittel im wesentlichen aus einer oder mehreren nichthydrolisierbaren fluorierten Verbindungen oder aus einem Paar besteht, das eine Phase umfaßt, die aus diesem oder diesen nichthydrolisierbaren fluorierten Verbindungen und aus einer Phase besteht, die aus einer hydrolisierbaren fluorierten Verbindung besteht, wobei eine der Phasen in der anderen gelöst ist.

13. Verfahren nach einem der Ansprüche 10 bis 12, dadurch gekennzeichnet, daß die Kristallisation bei einer Temperatur oberhalb des Schmelzpunktes des Flußmittels und vorzugsweise im Bereich zwischen 900 und 1200 °C durchgeführt wird.

14. Verfahren nach einem der Ansprüche 10 bis 13, dadurch gekennzeichnet, daß die Ausgangsmischung außer dem Aluminiumoxidpulver und dem Flußmittel hexagonale $\alpha$-Aluminiumoxidtäfelchen aus dem vorhergehenden Verfahren enthält.

15. Feuerfeste Steine oder Ziegel, hergestellt ausgehend von Vorformen nach einem der Ansprüche 1 bis 9.

16. Verbundstoffe, hergestellt durch Imprägnierung von Vorformen nach einem der Ansprüche 1 bis 9 mittels eines Metalls oder einer Metallegierung, die im geschmolzenen Zustand eingesetzt werden.

FIG. 1

Fɪɢ. 2

FIG. 3

FIG. 4

FIG. 5

FIG. 6

FIG. 7

FIG. 8

FIG. 9

FIG. 10

FIG. 11

FIG. 12

FIG. 13